# EUROPEAN PATENT APPLICATION

(11) **EP 2 651 175 A2**
(43) Date of publication of application: **16.10.2013**
(21) Application number: 13159445.9
(22) Date of filing: 15.03.2013
(51) Int. Cl.: H04W 76/00

(54) **Method and apparatus of handling MBMS service in a wireless communication system**

(30) Priority: 19.03.2012 US 201261612408 P; 14.03.2013 US 201313802756
(71) Applicant: HTC Corporation, Taoyuan County 330 (TW)
(72) Inventor: Mamadou, Kone, 330 Taoyuan Taoyuan City (TW)
(74) Representative: Konkonen, Tomi-Matti Juhani

(57) **Abstract**

A method of handling a multimedia broadcast multicast service (MBMS) service for a communication device in a wireless communication system is disclosed. The method comprises determining a state of the MBMS service of the communication device when the communication device enters a multicast-broadcast single frequency network (MBSFN) with a point-to-multipoint control channel (MCCH) information at a current repetition period; and updating the MCCH information when the state is changed.

## Description

### Cross Reference To Related Applications

This application claims the benefit of U.S. Provisional Application No. 61/612,408, filed on March 19, 2012 and entitled "Methods for updating MCCH information of a UE that entered a MBSFN area with stored MCCH information of that MBSFN Area with a state not interested to MBMS service and that becomes interested to a MBMS service", the contents of which are incorporated herein in their entirety.

### Background

### 1. Technical Field

The embodiment of the present invention relates to a method and apparatus used in a wireless communication system, and more particularly, to a method and apparatus of handling a multimedia broadcast multicast service (MBMS) service in a wireless communication system.

### 2. Description of the Prior Art

A long-term evolution (LTE) system supporting the 3GPP Rel-8 standard and/or the 3GPP Rel-9 standard are developed by the 3rd Generation Partnership Project (3GPP) as a successor of a universal mobile telecommunications system (UMTS), for further enhancing performance of the UMTS to satisfy increasing needs of users. The LTE system includes a new radio interface and a new radio network architecture that provides a high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple UEs, and communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint transmission/reception (CoMP), uplink (UL) multiple-input multiple-output (MIMO), etc. For a UE and an eNB to communicate with each other in the LTE-A system, the UE and the eNB must support standards developed for the LTE-A system, such as the 3GPP Rel-10 standard or later versions.

Multimedia broadcast multicast service (MBMS) service or evolved MBMS (E-MBMS) service have been introduced in the UMTS, the LTE system and the LTE-A system, for broadcasting multimedia contents such as TV programs, films, music, etc. Comparing with the traditional unicast, the MBMS service (hereafter referred to both the MBMS service and/or the E-MBMS service) is downlink only, and is broadcasted from the network to multiple (e.g., a specific group of) UEs via a point-to-multipoint transmission. Characteristic of the MBMS service enables the network to provide the MBMS service to unlimited number of UEs with a constant network load. Besides, a UE in the UMTS, the LTE system and/or the LTE-A system can receive the MBMS service inherently, and no additional hardware component is needed to be installed for the MBMS service. Thus, the MBMS service is attractive considering both hardware cost and resource efficiency.

A UE interested to a MBMS service receives MBMS service in a multicast-broadcast single frequency network (MBSFN) area by applying a point-to-multipoint control channel (MCCH) information, which change will be notified to UE by a MCCH information change notification on a physical downlink control channel (PDCCH). Therefore, a UE that was receiving a MBMS service and turns to a state of "not interested to receive MBMS service" may move to another cell that does not support MBMS service, and the MCCH information are still stored in the UE. When the UE moves back to the MBSFN area in the state of "not interested to receive MBMS service" and later on, the UE changes the state to "interested to receive MBMS service", the UE will try to find the MCCH information change notification on the PDCCH. However, a MCCH information change notification bit received by UE may show that the MCCH information which had been changed when the UE moved out the MBSFN area does not change currently. In addition, a modification period for receiving the MCCH change notification may have passed, such that the UE cannot receive the MCCH change notification. Both situations cause errors to the UE for receiving the MBMS service and need to be improved.

### Summary

The embodiment of the present invention therefore provides a method and apparatus of handling the MBMS service to solve the abovementioned problems.

A method of handling a multimedia broadcast multicast service (MBMS) service for a communication device in a wireless communication system is disclosed. The method comprises determining a state of the MBMS service of the communication device when the communication device enters a multicast-broadcast single frequency network (MBSFN) with a point-to-multipoint control channel (MCCH) information at a current repetition period; and updating the MCCH information when the state is changed.

A method of handling a multimedia broadcast multicast service (MBMS) service for a communication device in a wireless communication system is disclosed. The method comprises initiating the MBMS service and storing a point-to-multipoint control channel (MCCH) information corresponding to the MBMS service; and clearing a MCCH information when a state of the MBMS service of the communication device is changed.

A communication apparatus for a wireless communications system is disclosed. The communication apparatus comprises a processing means; a storage unit; and a program code, stored in the storage unit, wherein the program code instructs the processing means to execute the following steps: determining a state of the MBMS service of the communication device when the communication device enters a multicast-broadcast single frequency network (MBSFN) with a point-to-multipoint control channel (MCCH) information at a current repetition period; and updating the MCCH information when the state is changed.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a wireless communication system according to an example of the present invention.

FIG. 2 is a schematic diagram of a communication device 20 according to an example of the present invention.

FIG. 3 is a flowchart of a process according to an example of the present invention.

FIG. 4 is a timing diagram of the process shown in FIG. 4.

FIG. 5 is a flowchart of a process according to an example of the present invention.

FIG. 6 is a timing diagram of the process shown in FIG. 5.

### Detailed Description

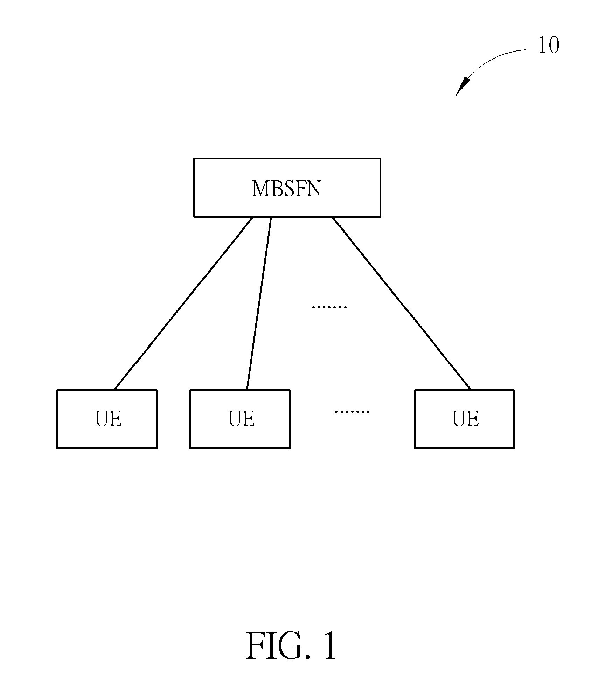

Please refer to FIG. 1, which is a schematic diagram of a wireless communication system 10 according to an example of the present invention. The wireless communication system 10 is briefly composed of a plurality of UEs and a multicast-broadcast single frequency network (MBSFN). The wireless communication system 10 may be a wideband code division multiple access (WCDMA) system such as a universal mobile telecommunications system (UMTS). Alternatively, the wireless communication system 10 may be an orthogonal frequency division multiplexing (OFDM) system and/or an orthogonal frequency division multiple access (OFDMA) system, such as a long term evolution (LTE) system, a LTE-Advanced (LTE-A) system or a successor of the LTE-A system. The network can provide a multimedia broadcast multicast service (MBMS) service to the UEs, wherein the MBMS service is referred to the MBMS service and/or the evolved MBMS (E-MBMS) service. Thus, the UEs can watch, store and/or edit multimedia contents such as TV programs, films, music, etc., via receiving the MBMS service.

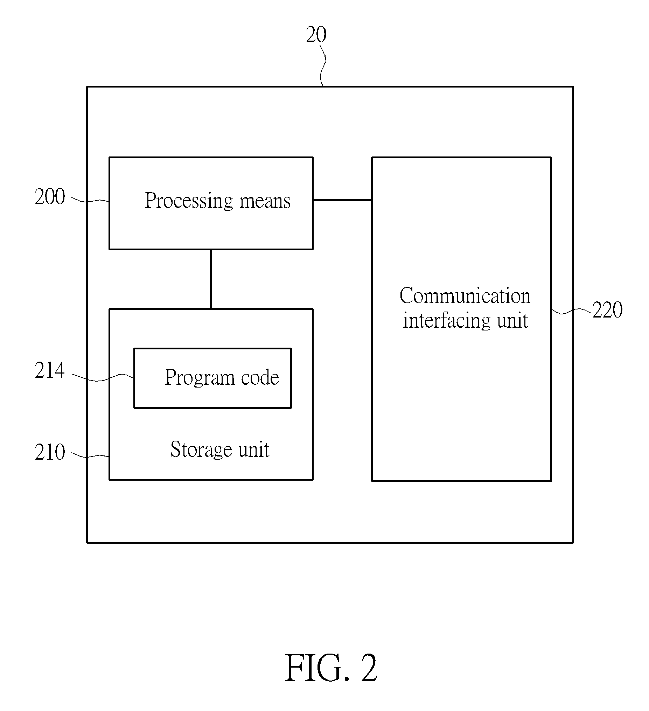

Please refer to FIG. 2, which is a schematic diagram of a communication device 20 according to an example of the present invention. The communication device 20 may realize a UE shown in FIG. 1, and include a processing means 200 such as a microprocessor or Application Specific Integrated Circuit (ASIC), a storage unit 210 and a communication interfacing unit 220. The storage unit 210 may be any data storage device that can store a program code 214, accessed and executed by the processing means 200. Examples of the storage unit 210 include but are not limited to a subscriber identity module (SIM), read-only memory (ROM), flash memory, random-access memory (RAM), CD-ROM/DVD-ROM, magnetic tape, hard disk and optical data storage device. The communication interfacing unit 220 is preferably a transceiver and is used to transmit and receive signals (e.g., messages or packets) according to processing results of the processing means 200.

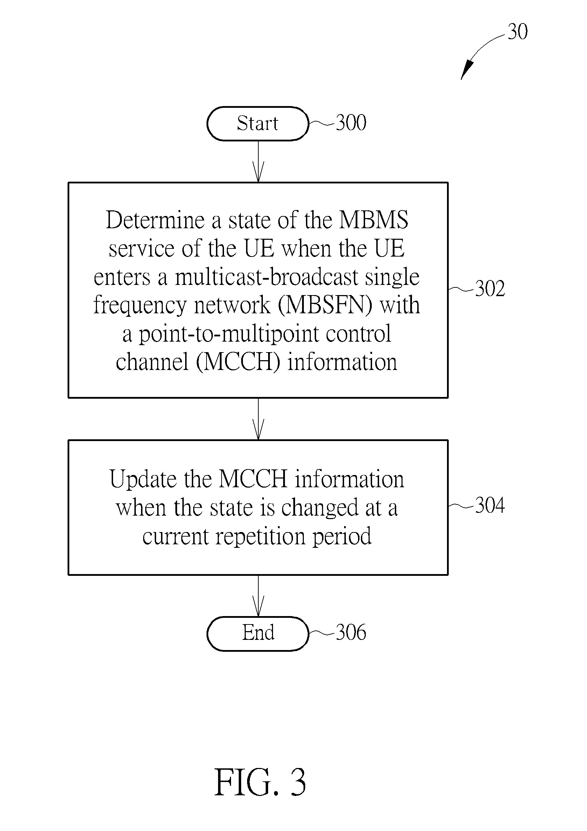

Please refer to FIG. 3, which is a flowchart of a process 30 according to an example of the present invention. The process 30 is utilized in a UE of the wireless communication system 10 shown in FIG. 1, for handling a multimedia broadcast multicast service (MBMS) service. The process 30 may be compiled into the program code 214, and includes the following steps:

Step 300: Start.

Step 302: Determine a state of the MBMS service of the UE when the UE enters a multicast-broadcast single frequency network (MBSFN) with a point-to-multipoint control channel (MCCH) information.

Step 304: Update the MCCH information when the state is changed at a current repetition period.

Step 306: End.

In the process 30, the UE determines the state of the MBMS service when the UE enters the MBSFN with the MCCH information. When the state is changed (e.g., the state is changed from "not interested to receive MBMS service" to "interested to receive MBMS service") at the current repetition period, the UE updates the MCCH information (e.g., the UE acquires the MCCH information at a next repetition period corresponding to the current repetition period) to ensure that the MBMS service can be received.

Since the UE does not know whether the MCCH information is valid or not when entering the MBSFN with the MCCH information, the embodiment of the present invention updates the MCCH information when the state is changed from "not interested to receive MBMS service" to "interested to receive MBMS service" at the current repetition period after the UE enters the MBSFN the MCCH information. In other words, even if a MCCH change notification bit is not equal to "1" (MCCH change notification bit="1" is used to notify the UE that the MCCH information of the MBSFN is changed) or a MCCH change notification for carrying the MCCH change notification bit is not received, the UE updates the MCCH information once the state is changed from "not interested to receive MBMS service" to "interested to receive MBMS service" after the UE enters the MBSFN with the MCCH information. In such a situation, the UE can avoid using invalid MCCH information of the MBSFN, so as to ensure normal MBMS operation.

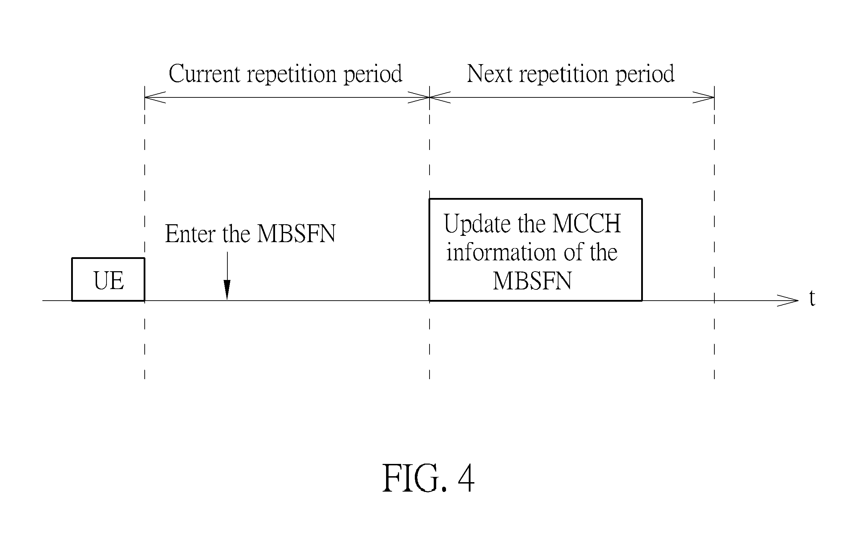

In detail, please refer to FIG. 4. In a situation that the UE enters a MBSFN with a MCCH information, the MCCH information carried by UE may be invalid since the UE had left the MBSFN before. Therefore, when the UE changes the state of the MBMS service from "not interested to receive MBMS service" to "interested to receive MBMS service" at a current repetition period, the UE updates the MCCH information of the MBSFN at a next repetition period corresponding to the current repetition period regardless of the MCCH notification bit. More specifically, if the MCCH notification bit received by UE is not equal to "1" (i.e. the MCCH notification bit indicates that the MCCH information of the MBSFN is not changed) or the MCCH notification carrying the MCCH notification bit is not received by the UE, the UE still updates the MCCH information at the next repetition period. Therefore, through updating the MCCH information of the MBSFN, the UE can avoid using invalid MCCH information of the MBSFN.

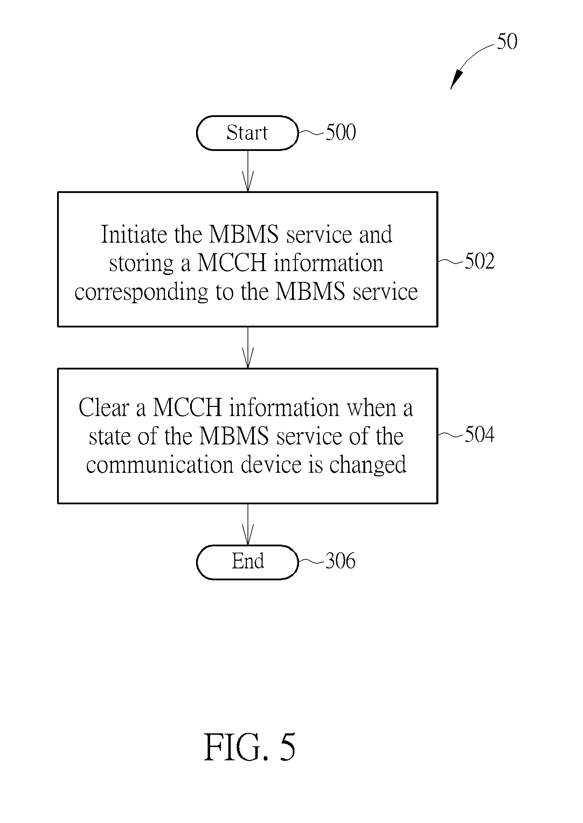

Furthermore, please refer to FIG. 5, which is a flowchart of a process 50 according to an example of the present invention. The process 50 is utilized in a UE of the wireless communication system 10 shown in FIG. 1, for handling a MBMS service. The process 50 may be compiled into the program code 214, and includes the following steps:

Step 500: Start.

Step 502: Initiate the MBMS service and storing a MCCH information corresponding to the MBMS service.

Step 504: Clear a MCCH information when a state of the MBMS service of the communication device is changed.

Step 506: End.

In the process 50, when the UE initiates the MBMS service, the MCCH information is received and stored by the UE. The MCCH information is definitely valid and can be used normally. Then, when the state is changed (e.g., the state is changed from "not interested to receive MBMS service" to "interested to receive MBMS service"), the UE clears the MCCH information to ensure that the MCCH information will not be used later, such that the UE must apply a MCCH acquisition procedure at a current repetition period and acquire the MCCH information at a next repetition period corresponding to the current repetition period for receiving the MBMS service again.

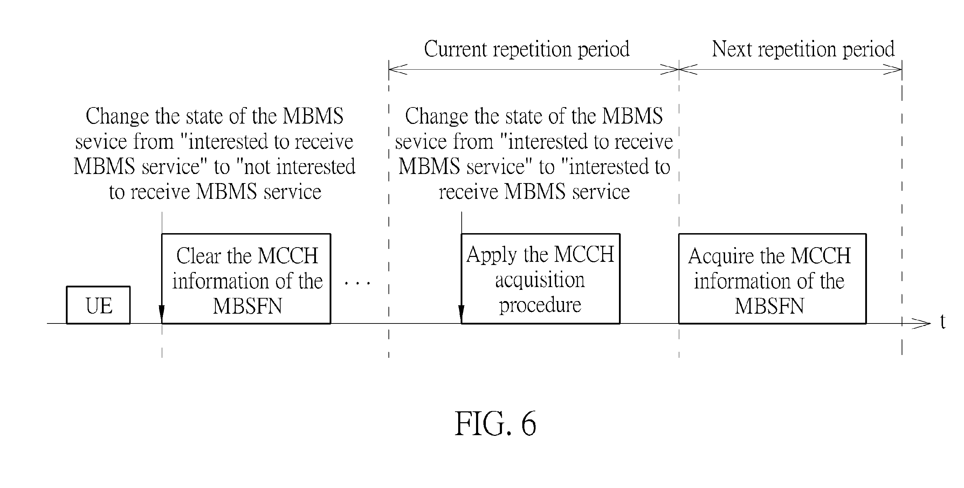

In detail, please refer to FIG. 6. When the UE changes the state of the MBMS service from "interested to receive MBMS service" to "not interested to receive MBMS service", the UE clears the MCCH information of the MBSFN immediately. Therefore, whenever the UE changes the state of the MBMS service from "not interested to receive MBMS service" to "interested to receive MBMS service", the UE must apply a MCCH acquisition procedure at a current repetition period and acquires the MCCH information of the MBSFN at a next repetition period. Since the UE has no valid MCCH information of the MBSFN when the state of the MBMS service indicates "not interested to receive MBMS service", the UE needs to acquire the latest MCCH information of the MBSFN to receive MBMS service, such that the problem of invalid MCCH information of the MBSFN no longer exists.

Please note that, the process 30, 50 both resolves problems of invalid MCCH information and missing the modification period for receiving the MCCH change notification bit. In detail, the UE updates the MCCH information of the MBSFN without waiting for reception of the MCCH change notification or without considering the MCCH change notification bit (i.e. the MCCH change notification bit has been received) in process 30. Therefore, the UE is always able to acquire the MCCH information which is valid for receiving the MBMS service and needs not to consider the modification period or the MCCH change notification bit. Similarly, the UE clears the MCCH information of the MBSFN when the UE changes the state of the MBMS service from "interested to receive MBMS service" to "not interested to receive MBMS service" in process 50. Therefore, the UE must apply the MCCH acquisition procedure and acquire the MCCH information which is valid for receiving the MBMS service and does not need to consider the modification period or the MCCH change notification bit.

To sum up, the present invention provides a method of handling a MBMS service in a wireless communication system. The method can resolve problems of using invalid MCCH information for receiving MBMS service and missing the modification period for receiving the MCCH change notification. Through updating the MCCH information of the MBSFN without waiting for reception of the MCCH change notification and without considering the MCCH change notification bit, or clearing the MCCH information of the MBSFN when the UE changes the state of the MBMS service from "interested to receive MBMS service" to "not interested to receive MBMS service", the UE can avoid problems of invalid MCCH information and missing the modification period for receiving the MCCH change notification bit.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling a multimedia broadcast multicast service (MBMS) service for a communication device in a wireless communication system, the method comprising:
determining a state of the MBMS service of the communication device when the communication device enters a multicast-broadcast single frequency network (MBSFN) with a point-to-multipoint control channel (MCCH) information; and
updating the MCCH information when the state is changed at a current repetition period.

2. The method of claim 1, wherein the step of updating the MCCH information when the state of the MBMS service of the communication device is changed comprises:
updating the MCCH information when the state of the MBMS service of the communication device is changed from a first state indicating that the communication device is not interested to a MBMS service to a second state indicating that the communication device is interested to a MBMS service.

3. The method of claim 1, wherein the step of updating the MCCH information when the state of the MBMS service of the communication device is changed comprises:
updating the MCCH information at a next repetition period corresponding to the current repetition period.

4. The method of claim 3, wherein a MCCH change notification bit is not equal to "1".

5. The method of claim 3, wherein the communication device does not wait for a MCCH change notification.

6. A method of handling a multimedia broadcast multicast service (MBMS) service for a communication device in a wireless communication system, the method comprising:
initiating the MBMS service and storing a point-to-multipoint control channel (MCCH) information corresponding to the MBMS service; and
clearing a MCCH information when a state of the MBMS service of the communication device is changed.

7. The method of claim 6, wherein the step of clearing the MCCH information when the state of the MBMS service of the communication device is changed comprises:
clearing the MCCH information when the state of the MBMS service of the communication device is changed from a first state indicating that the communication device is interested to the MBMS service to a second state indicating that the communication device is not interested to the MBMS service.

8. The method of claim 7, further comprising:
applying a MCCH acquisition procedure when the state of the MBMS service of the communication device is changed from the second state to the first state at a current repetition period.

9. The method of claim 8, wherein the step of applying the MCCH acquisition procedure when the state is changed from the second state to the first state comprises:
acquiring the MCCH information at a next repetition period corresponding to the current repetition period.

10. A communication apparatus for a wireless communications system, comprising:
a processing means;
a storage unit; and
a program code, stored in the storage unit, wherein the program code instructs the processing means to execute the following steps:
determining a state of the MBMS service of the communication device when the communication device enters a multicast-broadcast single frequency network (MBSFN) with a point-to-multipoint control channel (MCCH) information; and
updating the MCCH information when the state is changed at a current repetition period.

11. The apparatus of claim 10, wherein the step of updating the MCCH information when the state of the MBMS service of the communication device is changed comprises:
updating the MCCH information when the state of the MBMS service of the communication device is changed from a first state indicating that the communication device is not interested to a MBMS service to a second state indicating that the communication device is interested to a MBMS service.

12. The apparatus of claim 10, wherein the step of updating the MCCH information when the state of the MBMS service of the communication device is changed comprises:
updating the MCCH information at a next repetition period corresponding to the current repetition period.

13. The apparatus of claim 12, wherein a MCCH change notification bit is not equal to "1".

14. The apparatus of claim 12, wherein the communication device does not wait for a MCCH change notification at a next modification period.

15. A computer program product, comprising computer program logic configured to put into effect the method of any of claims 1-9.
